(19) Europäisches Patentamt
European Patent Office
Office européen des brevets

(11) **EP 2 027 373 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **07727320.9**

(22) Anmeldetag: **26.03.2007**

(51) Int Cl.:
***F01N 3/022*** *(2006.01)*

(86) Internationale Anmeldenummer:
**PCT/EP2007/052847**

(87) Internationale Veröffentlichungsnummer:
**WO 2007/134897 (29.11.2007 Gazette 2007/48)**

(54) **FILTEREINRICHTUNG, INSBESONDERE FÜR EIN ABGASSYSTEM EINER BRENNKRAFTMASCHINE**

FILTER DEVICE, ESPECIALLY FOR AN EXHAUST SYSTEM OF AN INTERNAL COMBUSTION ENGINE

DISPOSITIF DE FILTRAGE CONÇU EN PARTICULIER POUR UN SYSTÈME DE GAZ D'ÉCHAPPEMENT D'UN MOTEUR À COMBUSTION INTERNE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.05.2006 DE 102006024076**
**06.06.2006 DE 102006026161**

(43) Veröffentlichungstag der Anmeldung:
**25.02.2009 Patentblatt 2009/09**

(73) Patentinhaber: **Robert Bosch GmbH**
**70442 Stuttgart (DE)**

(72) Erfinder:
• KOMORI, Teruo
70378 Stuttgart (DE)
• THUENER, Lars
70176 Stuttgart (DE)
• HUELSMEIER, Dominik
70197 Stuttgart (DE)
• SCHILLER, Christian
71272 Renningen (DE)
• HOEFFKEN, Tobias
70192 Stuttgart (DE)

(56) Entgegenhaltungen:
EP-A1- 0 089 751      WO-A-2005/115589
US-A- 4 416 676

EP 2 027 373 B1

**Beschreibung**

Stand der Technik

Die Erfindung betrifft ein Filterelement, insbesondere für ein Abgassystem einer Brennkraftmaschine, nach dem Oberbegriff der Ansprüche 1 und 3 sowie einen Rußfilter mit einem Filterelement nach dem nebengeordneten Anspruch 19.

Aus der EP 1 502 640 A1 und der EP 0089 751 sind Filterelemente bekannt mit einer Eintrittsfläche und mit einer Austrittsfläche, mit einer Vielzahl von Eintrittskanälen und mit einer Vielzahl von Austrittskanälen, wobei die Eintrittskanäle einen sechseckförmigen Querschnitt und die Austrittskanäle einen quadratischen oder rautenförmigen Querschnitt aufweisen, und wobei die Eintrittskanäle und die Austrittskanäle durch eine Filterwand aus einem offenporigen Material getrennt sind.Die Filterelemente bestehen häufig aus einem keramischen Werkstoff und werden in der Regel durch Extrudieren hergestellt. Dies bedeutet, dass der Rohling des Filterelements ein prismatischer Körper mit einer Vielzahl von parallel zueinander verlaufenden Kanälen ist. Die Kanäle eines Rohlings sind zunächst an beiden Enden offen.

Damit das zu reinigende Abgas durch die Wände des Filters strömt, wird ein Teil der Kanäle am hinteren Ende des Filterelements verschlossen, während ein anderer Teil der Kanäle am vorderen Ende des Filterelements verschlossen wird. Dadurch werden zwei Gruppen von nämlich die sogenannten Eintrittskanäle, welche am hinteren Ende verschlossen sind, und die sogenannten Austrittskanäle, welche am Anfang des Filterelements verschlossen sind.

Zwischen den Eintrittskanälen und den Austrittskanälen besteht ausschließlich über die porösen Wände des Filterelements (nachfolgend Filterwände) eine Strömungsverbindung, so dass das Abgas das Filterelement nur durchströmen kann, indem es aus den Eintrittskanälen durch die Wände des Filterelements hindurch in die Austrittskanäle strömt.

Bei dem bekannten Filterelement lagern sich mit der Zeit an der stromaufwärts gelegenen Oberfläche der Filterwand Rußpartikel ab. Diese Rußpartikel führen zu einer Verringerung der Durchlässigkeit der Filterwand und in Folge dessen zu einer Erhöhung des Druckabfalls, der beim Durchtritt des Gasstroms durch die Filterwand auftritt. Entsprechend erhöht sich der sogenannte "Abgasgegendruck". Überschreitet dieser einen bestimmten Wert, wird der Filter regeneriert, indem die abgeschiedenen Rußpartikel verbrannt werden. Dabei wird Wärme freigesetzt, was zu einer Temperaturerhöhung im Filterelement führt.

Je größer die Filterfläche des Wabenkörpers ist, desto längere Regenerationsintervalle werden möglich. Wabenkörper mit hoher Zelldichte, das heißt mit kleinen Kanaldurchmessern, weisen eine hohe volumenspezifische Filterfläche auf. Allerdings dürfen die Kanäle auf der Eintrittsseite nicht zu klein werden, da sonst eine Verblockung der Kanäle durch Asche- oder Rußpartikel zu befürchten ist. Außerdem ist bei einem zu hohen Anteil des durch die Durchströmung der Filterkanäle verursachten Druckverlustes am Gesamtdruckverlust des Filters eine ungleichmäßige Beladung zu befürchten. Dies ist insbesondere dann ungünstig, wenn dieser hohe Anteil durch die Kanäle auf der Abströmseite des Filters verursacht werden, da in diesem Fall die Strömung im hinteren Bereich des Filters durch die Filterwand tritt und dort ein größerer Teil des Rußes abgeschieden wird. In diesem Teil des Filters treten bei der Regeneration ohnehin die höchsten Temperaturen auf. Dieser Effekt wird durch eine große eingelagerte Rußmenge noch verstärkt. Diese Gefahr ist vor allem bei Filterelementen aus Cordierit gegeben, da Cordierit eine vergleichsweise geringe spezifische Wärmekapazität hat und deshalb bei der Oxidation von Rußablagerungen lokal sehr hohe Temperaturen auftreten können. In Folge dessen können unter ungünstigen Umständen bei der Regeneration so hohe Temperaturen innerhalb des Filterelements auftreten, dass die thermische Stabilität des Cordierits nicht mehr gewährleistet ist. Dieser können. In Folge dessen können unter ungünstigen Umständen bei der Regeneration so hohe Temperaturen innerhalb des Filterelements auftreten, dass die thermische Stabilität des Cordierits nicht mehr gewährleistet ist. Dieser Zusammenhang hat bisher den Einsatz von Filterelementen aus Cordierit in Personenkraftwagen verhindert.

Aus der WO 2005/1165589 und der US 5,416,676 sind Filterelemente bekannt mit einer Eintrittsfläche und mit einer Austrittsfläche, mit einer Vielzahl von Eintrittskanälen und mit einer Vielzahl von Austrittskanälen, wobei die Querschnittsfläche der Eintrittskanäle größer ist als die die Querschnittsfläche der Eintrittskanäle ist. Auch sind die Eintrittskanäle weniger rund als die Austrittskanäle. Bei diesen Filterelementen sind die Kontaktflächen zwischen zwei benachbart angeordneten Eintrittskanälen relativ groß. Dies ist deswegen von Nachteil, weil diese Kontaktflächen keinen Beitrag zur Filterung der Abgase leisten.

Offenbarung der Erfindung

Aufgabe der vorliegenden Erfindung ist es, die Aufnahmefähigkeit des Filterelements für Ruß und Asche zu erhöhen und dadurch die Intervalle zwischen den Regenerierungen zu verlängern. Des Weiteren soll verhindert werden, dass im Bereich der Austrittsfläche des Filterelements unzulässig hohe Temperaturen bei der Regenerierung auftreten, die zur Zerstörung des Filterelements führen können.

Diese Aufgabe wird erfindungsgemäß bei einem Filterelement gemäß der nebengeordneten Ansprüche 1 und 3 mit den kennzeichnenden Merkmalen der Ansprüche 1 und 3 gelöst.

Die erfindungsgemäßen Lösungsansätze gewährleisten, dass der Anteil der Druckverluste in den Eintrittskanälen am Gesamtdruckverlust etwa gleich groß ist wie der Anteil der Druckverluste der Austrittskanäle am Gesamtdruckverlust und gleichzeitig die Oberfläche der Eintrittskanäle größer als die Oberfläche der Austrittskanäle ist. Dies führt zu einer gleichmäßigen Beladung , des Filterelements mit Ruß. Infolgedessen erfolgt die durch das Verbrennen des Rußes bei der Regeneration verursachte Aufheizung des Filterelements gleichmäßig und örtliche Temperaturspitzen, die zur Zerstörung des Filterelements führen können, werden vermieden.

Dadurch wird der Rundheitsparameter der Eintrittskanäle reduziert, was sich positiv auf die Verteilung der Druckverluste innerhalb des Filterelements auf die Eintrittskanäle, die Filterwände und die Austrittskanäle auswirkt.

Weitere Vorteile und vorteilhafte Ausgestaltungen der Erfindung sind der nachfolgenden Zeichnung, deren Beschreibung und den Patentansprüchen entnehmbar.

Es zeigen:

Figur 1        eine schematische Darstellung einer Brennkraftmaschine mit einer erfindungsgemäßen Abgasnachbehandlungseinrichtung;

Figur 2        ein erfindungsgemäßes Filterelement im Längsschnitt und

Figuren 3 bis 6      Querschnitte durch Ausführungsbeispiele erfindungsgemäßer Filterelemente.

Ausführungsformen der Erfindung

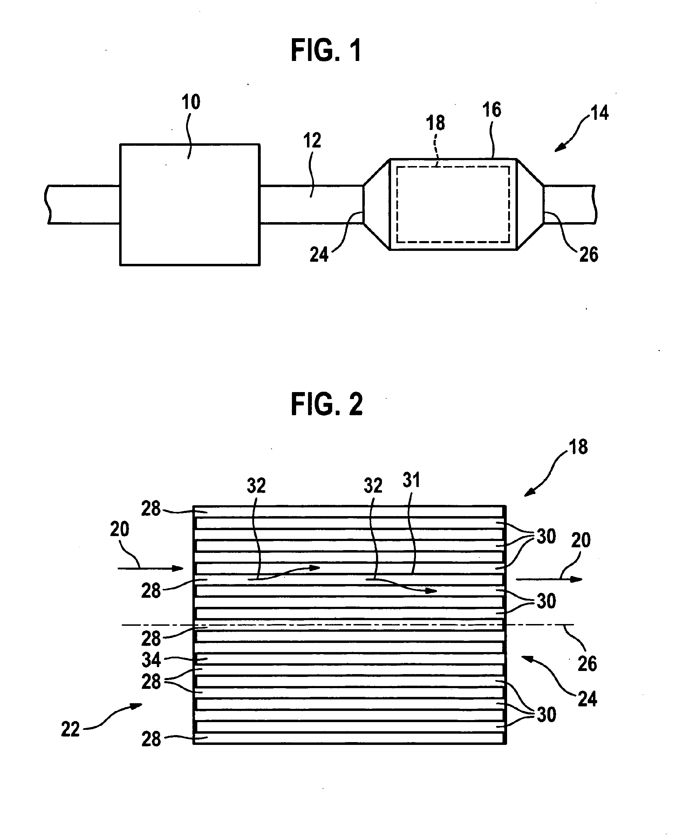

In Figur 1 trägt eine Brennkraftmaschine das Bezugszeichen 10. Die Abgase werden über ein Abgasrohr 12 abgeleitet, in dem eine Filtereinrichtung 14 angeordnet ist. Mit dieser werden Rußpartikel aus dem im Abgasrohr 12 strömenden Abgas herausgefiltert. Dies ist insbesondere bei Diesel-Brennkraftmaschinen erforderlich, um gesetzliche Bestimmungen einzuhalten.

Die Filtereinrichtung 14 umfasst ein zylindrisches Gehäuse 16, in dem eine im vorliegenden Ausführungsbeispiel rotationssymmetrisches, insgesamt ebenfalls zylindrisches Filterelement 18 angeordnet ist.

In Figur 2 ist ein Querschnitt durch ein erfindungsgemäßes Filterelement 18 dargestellt. Das Filterelement 18 kann beispielsweise ist als extrudierter Formkörper aus einem keramischen Material, wie zum Beispiel Cordierit, hergestellt werden.

Das Filterelement 18 wird in Richtung der Pfeile 20 von nicht dargestelltem Abgas durchströmt. Eine Eintrittsfläche hat in Figur 2 das Bezugszeichen 22, während eine Austrittsfläche in Figur 2 das Bezugszeichen 24 hat.

Parallel zu einer Längsachse 26 des Filterelements 18 verlaufen mehrere Eintrittskanäle 28 im Wechsel mit Austrittskanälen 30. Die Eintrittskanäle 28 sind an der Austrittsfläche 24 verschlossen. Die Verschlussstopfen sind in Figur 2 ohne Bezugszeichen dargestellt. Im Gegensatz dazu sind die Austrittskanäle 30 an der Austrittsfläche 24 offen und im Bereich der Eintrittsfläche 22 verschlossen.

Der Strömungsweg des ungereinigten Abgases führt also in einen der Eintrittskanäle 28 und von dort durch eine Filterwand 31 in einen der Austrittskanäle 30. Exemplarisch ist dies durch Pfeile 32 dargestellt.

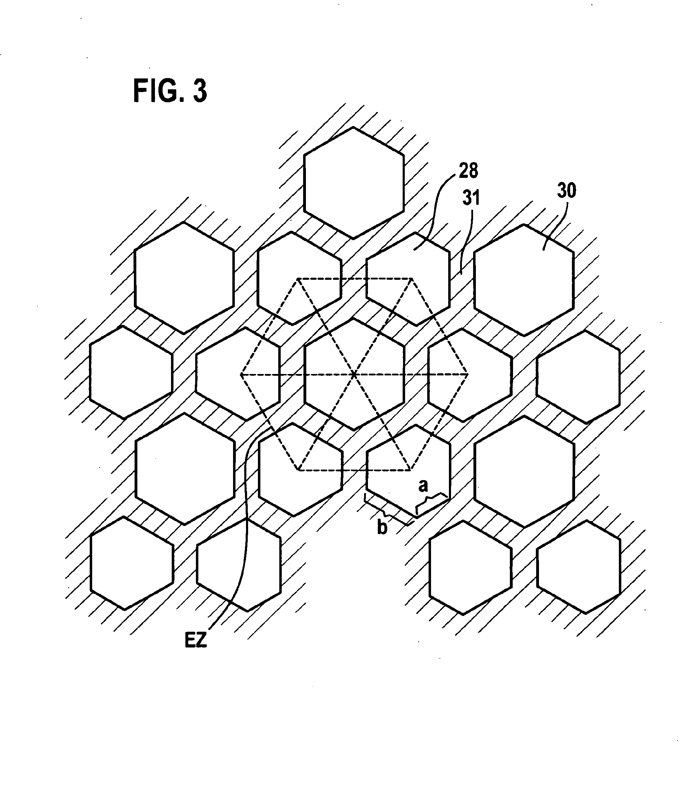

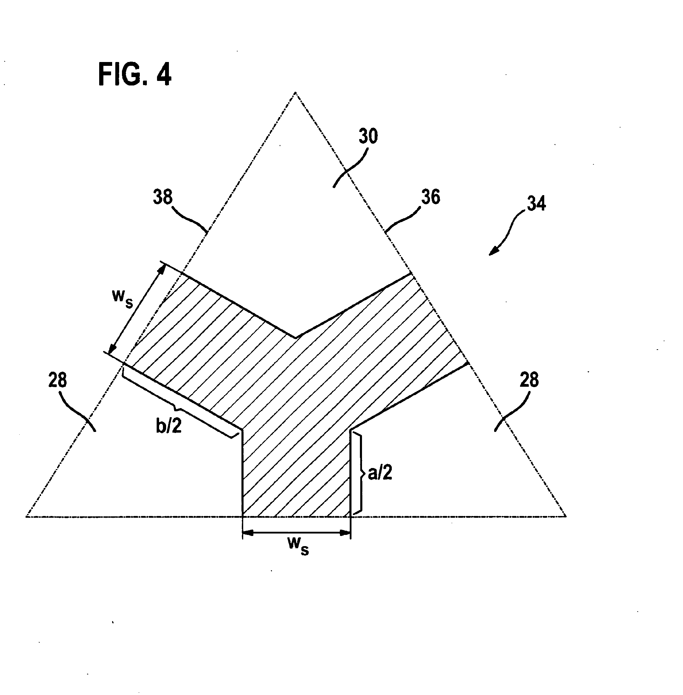

Das Filterelement 18 ist ein prismatischer Körper, dessen Querschnitt aus einer sich regelmäßig wiederholenden Folge von Eintrittskanälen und Austrittskanälen zusammensetzt. Diese sich regelmäßig wiederholenden Folge von Eintrittskanälen und Austrittskanälen kann in vielen Fällen durch Spiegelung, Rotation und/oder Translation einer sogenannten Einheitszelle erzeugt werden. In anderen Worten: Die gesamte Querschnittsgeometrie des Filterelements lässt sich aus mehreren Einheitszellen zusammensetzen. Bei den Ausführungsbeispielen gemäß der Figuren 3 und 4 sind die Einheitszellen sechseckig. Die Einheitszellen können beispielsweise auch quadratisch, rechteckig oder rautenförmig sein. Allerdings ist die Erfindung nicht auf Querschnittsgeometrien beschränkt, die sich auf Einheitszellen zurückführen lassen, beschränkt.

Nachfolgend werden die strömungstechnischen Zusammenhänge innerhalb eines Filterelements hergeleitet und beschrieben. Dabei wird die Fläche einer Einheitszelle mit $A_{EZ}$ bezeichnet. Die Anzahl der Eintritts- und Austrittskanäle in dieser Einheitszelle wird mit $n_{ein}$ bzw. $n_{aus}$ bezeichnet.

Im Folgenden wird der Anteil des Filtervolumens, der auf die Eintrittskanäle entfällt, mit $\chi$ bezeichnet. Weiter wird der Anteil des Filtervolumens, der Teil der auf das Filtermaterial entfällt, mit $\varphi$ bezeichnet. Diese Anteile $\chi$ und $\varphi$ haben bei dem gesamten Filterelement die gleichen Werte wie bei einer Einheitszelle, da das Filterelement aus mehreren Einheitszellen zusammengesetzt wird.

Der für den Strömungswiderstand eines durchströmten Kanals maßgebliche Durchmesser ist der so genannte hydraulische Durchmesser $d_h$ :

$$d_h = \frac{4A}{U} \qquad\qquad (1)$$

Der hydraulische Durchmesser $d_h$ hängt von der Querschnittsfläche $A$ und von dem Umfang des Kanals $U$ ab.

Für den hydraulischen Durchmesser der Eintrittskanäle 28 gilt:

$$d_{h,ein} = \frac{4\chi A_{EZ}}{n_{ein} U_{ein}} \,, \qquad\qquad (2)$$

Für den hydraulischen Durchmesser der Austrittskanäle 30 gilt:

$$d_{h,aus} = \frac{4(1 - \varphi - \chi)A_{EZ}}{n_{aus} U_{aus}} \,. \qquad\qquad (3)$$

Die volumenspezifische Filtrationsfläche $A'''$ eines Filterelements 18 der Länge L entspricht, wenn man die durch die Stopfen verlorene Filterlänge außer Acht lässt,

$$A''' = \frac{L n_{ein} U_{ein}}{L A_{EZ}} = \frac{n_{ein} U_{ein}}{A_{EZ}} \,. \qquad\qquad (4)$$

Einsetzen des Kanalumfangs aus Gleichung (2) führt zu

$$A''' = \frac{4\chi}{d_{h,ein}} \,. \qquad\qquad (5)$$

Aus Gleichung (5) ergibt sich, dass ein großer Anteil $\chi$ der Eintrittskanäle 28 am Gesamtvolumen des Filterelements 18 sowie kleine Kanaldurchmesser zu einer hohen volumenspezifischer Filterfläche $A'''$ führen.

Während die Größe der Kanäle sinnvoll durch den hydraulischen Durchmesser $d_h$ beschrieben ist, lässt sich die Form der Kanäle durch den Rundheitsparameter $f$ beschreiben:

$$f = \frac{4\pi A}{U^2} \,. \qquad\qquad (6)$$

$f$ wird für runde Kanäle zu 1, für zunehmend von der Rundheit abweichende Kanalformen nimmt der Wert von $f$ ab.

Dic Verwendung der Gleichungen (2) und (3) sowie der Definition der Rundheit aus Gleichung (6) führt zu folgenden Ausdrücken für die hydraulischen Durchmesser:

$$d_{h,ein} = \sqrt{\frac{4}{\pi} f_{ein} \chi \frac{A_{EZ}}{n_{ein}}} \,, \qquad\qquad (7)$$

$$d_{h,aus} = \sqrt{\frac{4}{\pi} f_{aus}(1-\varphi-\chi)\frac{A_{EZ}}{n_{aus}}} \;. \tag{8}$$

Einsetzen in Gleichung (5) führt zu:

$$A^* = \sqrt{\frac{4\pi\chi\, n_{ein}}{f_{ein}\, A_{EZ}}} \tag{9}$$

Der Druckverlust, der durch die Durchströmung der Kanäle verursacht wird, lässt sich entsprechend der bekannten Literatur abschätzen mit:

$$\Delta p_{ein} = \frac{1}{3} F\mu L \frac{\dot{V}}{Q} \frac{1}{d_{h,ein}^{2}\chi} \;, \tag{10}$$

$$\Delta p_{aus} = \frac{1}{3} F\mu L \frac{\dot{V}}{Q} \frac{1}{d_{h,aus}^{2}(1-\varphi-\chi)} \;. \tag{11}$$

Hierbei bezeichnet $\dot{F}$ einen empirischen, dimensionslosen Faktor, $\mu$ die dynamische Viskosität des Abgases, $\dot{V}$ den Abgasvolumenstrom und $Q$ die Querschnittsfläche des Filterelements 18. Setzt man die Druckverlustanteile aus den beiden Gleichungen zu einander ins Verhältnis, ergibt sich unter Verwendung der Variablen $R_V = \chi/(1-\varphi-\chi)$ für das Volumenverhältnis von Eintrittskanal 28 und Austrittskanal 30:

$$\frac{\Delta p_{ein}}{\Delta p_{aus}} = \frac{(1-\chi-\varphi)^{2}}{\chi^{2}} \frac{n_{ein}}{n_{aus}} \frac{f_{aus}}{f_{ein}} = \frac{1}{R_V^{2}} \frac{n_{ein}}{n_{aus}} \frac{f_{aus}}{f_{ein}} \tag{12}$$

Aus diesen Zusammenhängen ergeben sich die vorteilhaften Wirkungen der erfindungsgemäß beanspruchten Querschnittsgeometrien. Insbesondere ergibt sich daraus, dass Filterelemente 18 mit einer großen Zahl von Zellen/Kanälen bezogen auf die Querschnittsfläche, die ein Volumenverhältnis $R_v$ von Eintrittskanälen 28 und Austrittskanälen 30 $R_v > 1$ aufweisen, und bei denen keine vermehrte Rußeinlagerung im stromabwärts gelegenen Bereich der Eintrittskanäle auftritt, nur realisierbar sind, wenn der Wabenkörper mehr Eintrittskanäle als Austrittskanäle aufweist ($n_{ein} > n_{aus}$) und/oder die Rundheit $f_{ein}$ der Eintrittskanäle 28 geringer ist als die Rundheit $f_{aus}$ der Austrittskanäle 30 ($f_{ein} < f_{aus}$).
In Figur 3 ist ein Ausschnitt durch einen Querschnitt eines Ausführungsbeispiels eines erfindungsgemäßen Filterelements 18 stark vergrößert dargestellt. Der Querschnitt des Filterelements 18 setzt sich jeweils aus einem Austrittskanal 30, der im Querschnitt die Form eines gleichseitigen Sechsecks aufweist, und insgesamt sechs, den Austrittskanal 30 umgebenden Eintrittskanälen 28 zusammen. Aus Gründen der Übersichtlichkeit sind nicht alle Eintrittskanäle 28 und nicht alle Austrittskanäle 30 mit Bezugszeichen versehen.
Die Eintrittskanäle 28 weisen ebenfalls einen sechseckigen Querschnitt auf, allerdings sind nicht alle sechs Seiten dieses Sechsecks gleich lang. Es gibt vielmehr erste Seiten a und zweite, Seiten b, die sich abwechseln. Durch die verschieden langen Seiten a, b der Eintrittskanäle 28 wird der Rundheitsparameter $f_{ein}$ der Eintrittskanäle 28 gegenüber dem Rundheitsparameter $f_{aus}$ der Austrittskanäle 30 reduziert. Im Ergebnis führt dies dazu, dass die Oberfläche in den Eintrittskanälen 28 größer ist als die Oberfläche der Austrittskanäle 30, so dass sich die gewünschte gleichmäßige Rußbeladung des Filterelements 18 einstellt.

Bei dem Ausführungsbeispiel gemäß Figur 3 ist außerdem das Verhältnis zwischen der Zahl $n_{ein}$ der Eintrittskanäle 28 und der Zahl $n_{aus}$ der Austrittskanäle gleich 2:1. Auch dadurch, dass es mehr Eintrittskanäle 28 als Austrittskanäle 30 gibt, fördert die gleichmäßige Beladung des Filterelements 18 mit Ruß.

Man kann sich den Querschnitt des Filterelements 18 gemäß Figur 3 auch durch das Zusammensetzen mehrerer sechseckiger Einheitszellen EZ vorstellen. Diese sechseckigen Einheitszellen EZ sind wiederum aus insgesamt sechs spiegelsymmetrischen Dreiecken 34 zusammengesetzt.

In Figur 4 ist ein solches Dreieck 34 dargestellt. Die wichtigsten geometrischen Größen, nämlich die Längen a und b sowie eine Wandstärke $W_s$ sind in Figur 4 eingetragen. Die Einheitszelle EZ wird durch mehrfaches Spiegeln des Dreiecks 34 um die Seiten 36 und/oder 38 gebildet.

**Tabelle 1:** Bevorzugte Bereiche für die geometrischen Parameter in Figur 4

| Parameter [Einheit] | Minimum (ideal) | Maximum (ideal) |
|---|---|---|
| a [mm] | 0.4 (0.53) | 1.2 (0.59) |
| $w_s$ [mm] | 0.2 (0.3) | 0.6 (0.45) |
| Verhältnis a:b [] | 0.3 (0.6) | 1.5 (0.75) |

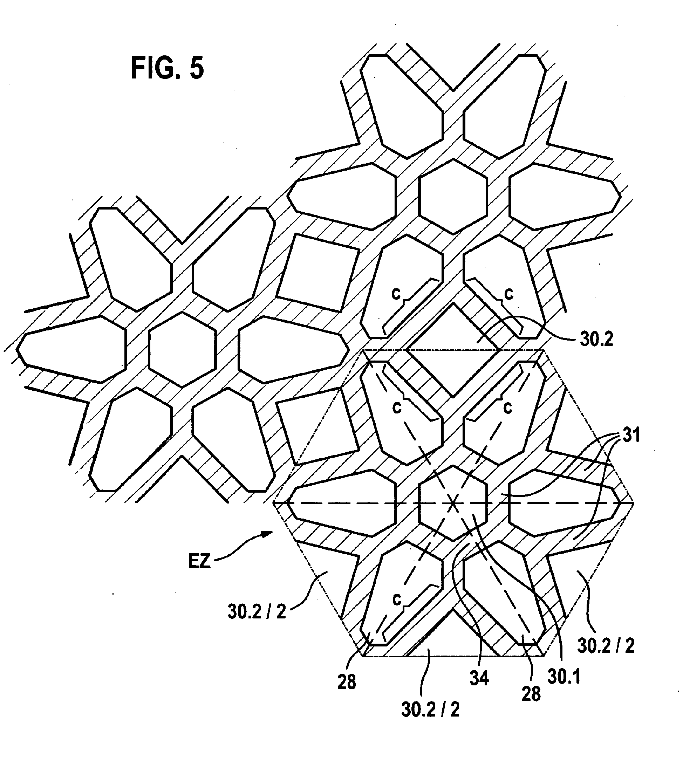

In Figur 5 ist ein weiteres Ausführungsbeispiel eines erfindungsgemäßen Filterelements im Querschnitt dargestellt. In Figur 5 sind insgesamt drei Einheitszellen EZ aneinandergefügt. Es versteht sich von selbst, dass durch das Aneinanderfügen weiterer Einheitszellen EZ beliebig große Filterelementquerschnitte realisiert werden können. In der Mitte der Einheitszelle EZ ist ein zentraler Austrittskanal 30.1 angeordnet, der bei dem Ausführungsbeispiel gemäß Figur 5 im Querschnitt die Form eines regelmäßigen Sechsecks aufweist.

Um den zentralen Austrittskanal 30.1 sind insgesamt sechs Eintrittskanäle 28 angeordnet. Diese Eintrittskanäle 28, von denen nicht alle mit Bezugszeichen versehen wurden, haben im Querschnitt die Form eines spiegelsymmetrischen Siebenecks.

Die längsten Seiten dieses Siebenecks sind in Figur 5 mit dem Buchstaben c bezeichnet. Jeweils vier Eintrittskanäle 28 umschließen mit ihren Seiten c jeweils einen äußeren Austrittskanal 30.2. Diese äußeren Austrittskanäle 30.2 erstrecken sich über zwei Einheitszellen EZ hinweg. In der in Figur 5 durch eine strichpunktierte Linie dargestellten Einheitszelle EZ sind an den Seiten der Einheitszelle, an der keine weitere Einheitszelle anschließt infolgedessen nur jeweils ein halber äußerer Austrittskanal 30.2 dargestellt. Dieser Sachverhalt ist durch das Bezugszeichen 30.2 / 2 angedeutet.

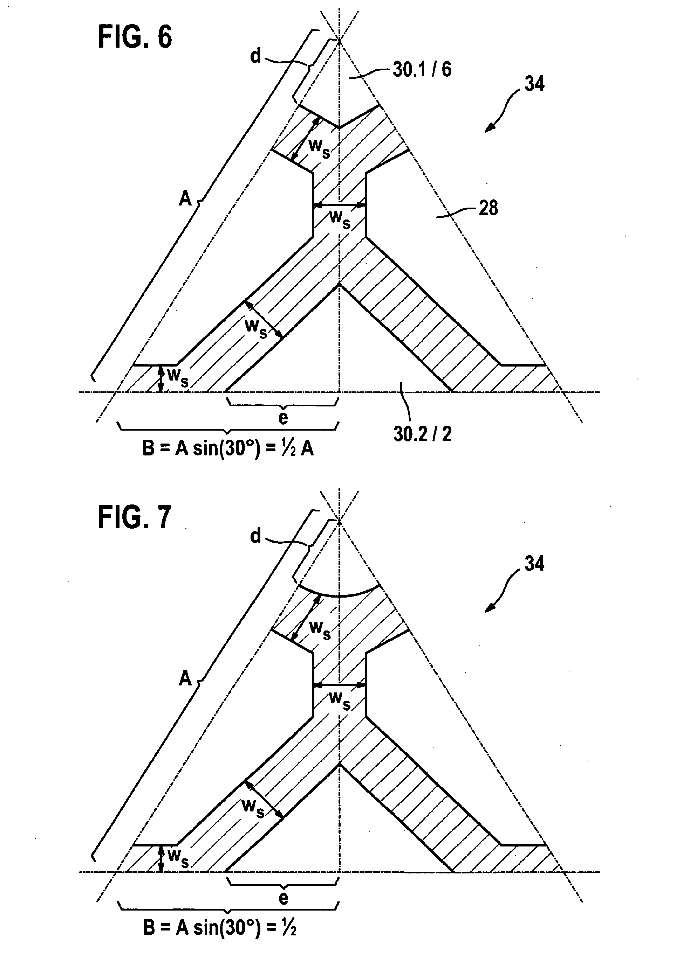

Die Figuren 6 und 7 zeigen Dreiecke 34, aus denen die Einheitszellen EZ gemäß Figur 5 zusammengesetzt sind. Dabei sind die wichtigsten geometrischen Parameter, nämlich die Seitenstrecken A, B, d und e eingetragen. Es hat sich als vorteilhaft erwiesen, wenn sich diese Parameter innerhalb der in nachfolgender Tabelle eingetragenen Wertebereiche befinden.

**Tabelle 2:** Bevorzugte Bereiche für die geometrischen Parameter in Figur 6 und 7

| Parameter [Einheit] | Minimum (ideal) | Maximum (ideal) |
|---|---|---|
| A [mm] | 2.4 (2.7) | 4 (3.1) |
| $w_s$ [mm] | 0.2 (0.33) | 0.6 (0.44) |
| $\beta$ [°] | 30 (40) | 60 (50) |
| Verhältnis d:A [] | 0.1 (0.17) | 0.3 (0.25) |
| Verhältnis e:B [] | 0.4 (0.5) | 0.7 (0.6) |

Bei dem Ausführungsbeispiel gemäß Figur 7 ist der zentrale Austrittskanal 30.1 kreisförmig im Querschnitt. Ansonsten ist die Querschnittsgeometrie gleich wie bei dem Ausführungsbeispiel gemäß Figur 6.

Es versteht sich von selbst, dass die Filterwände 31 nicht scharfkantig ineinander übergehen müssen, sondern bei Bedarf durch einen Radius (nicht dargestellt) der Übergang von einer Filterwand 31 in eine andere Filterwand 31 gestaltet werden kann. Diese Radien erleichtern die Herstellung und reduzieren die Spannungsspitzen im Bereich der Übergänge von einer Filterwand 31 in eine andere Filterwand 31. Des Weiteren ist es auch denkbar und möglich, dass die Filterwände 31 im Querschnitt nicht gradlinig verlaufen, sondern gekrümmt sind.

In vielen Anwendungsfällen hat es sich als vorteilhaft erwiesen, wenn mindestens die stromaufwärts gelegene Oberfläche der Filterwand (31) eine katalytische Beschichtung aufweist.

**Patentansprüche**

1. Filterelement, insbesondere zur Filterung von Abgasen einer Dieselbrennkraftmaschine, mit einer Eintrittsfläche (22) und mit einer Austrittsfläche (24), mit einer Vielzahl von Eintrittskanälen (28), und mit einer Vielzahl von Austrittskanälen (30), wobei die Eintrittskanäle (28), und die Austrittskanäle (30) durch Filterwände (31) aus einem offenporigen Material getrennt sind, wobei die Querschnittsfläche aller Eintrittskanäle (28) größer als die Querschnittsfläche aller Austrittskanäle (30) ist, dass die Zahl der Eintrittskanäle (28) größer als die Zahl der Austrittskanäle (30) ist, und dass ein Rundheitsparameter $f_{ein}$ des Querschnitts der Eintrittskanäle (28) kleiner als ein Rundheitsparameter $f_{aus}$ des Querschnitts der Austrittskanäle (30) ist, wobei der Rundheitsparameter $f$ durch folgende Gleichung definiert ist:

$$f = \frac{4\pi A}{U^2},$$

   **dadurch gekennzeichnet, dass** der Querschnitt des Filterelements (18) durch Aneinanderfügen mehrerer sechseckiger Einheitszellen (EZ) gebildet wird, dass jede Einheitszelle (EZ) aus gleichseitigen Dreiecken (34) zusammengesetzt ist, dass jedes der Dreiecke (34) spiegelsymmetrisch zu den benachbarten Dreiecken (34) bezüglich der gemeinsamen Dreieckseite ist, dass in jedem Dreieck (34) drei Filterwände (31) vorhanden sind, und dass jede Filterwand (31) orthogonal zu einer Seite des Dreiecks (34) verläuft. (Figur 3);
   mit:

   A: Querschnittsfläche eines Kanals (28, 30)
   U: Umfang eines Kanals (28, 30).

2. Filterelement nach Anspruch 1, **dadurch gekennzeichnet, dass** der Schnittpunkt der Filterwände (31) innerhalb des Dreiecks (34) liegt. (Figur 3)

3. Filterelement, insbesondere zur Filterung von Abgasen einer Dieselbrennkraftmaschine, mit einer Eintrittsfläche (22) und mit einer Austrittsfläche (24), mit einer Vielzahl von Eintrittskanälen (28), und mit einer Vielzahl von Austrittskanälen (30), wobei die Eintrittskanäle (28), und die Austrittskanäle (30) durch Filterwände (31) aus einem offenporigen Material getrennt sind, wobei die Querschnittsfläche aller Eintrittskanäle (28) größer als die Querschnittsfläche aller Austrittskanäle (30) ist, dass die Zahl der Eintrittskanäle (28) größer als die Zahl der Austrittskanäle (30) ist, und dass ein Rundheitsparameter $f_{ein}$ des Querschnitts der Eintrittskanäle (28) kleiner als ein Rundheitsparameter $f_{aus}$ des Querschnitts der Austrittskanäle (30) ist, wobei der Rundheitsparameter $f$ durch folgende Gleichung definiert ist:

$$f = \frac{4\pi A}{U^2},$$

   **dadurch gekennzeichnet, dass** der Querschnitt des Filterelements (18) durch Aneinanderfügen mehrerer sechseckiger Einheitszellen (EZ) gebildet wird, dass jede Einheitszelle (EZ) aus gleichseitigen Dreiecken (34) zusammengesetzt ist, dass jedes der Dreiecke (34) spiegelsymmetrisch zu den benachbarten Dreiecken (34) bezüglich der gemeinsamen Dreieckseite ist, dass im Mittelpunkt jeder Einheitszelle (EZ) ein zentraler Austrittskanal (30.1) angeordnet ist, dass der zentrale Austrittskanal (30.1) von sechs Eintrittskanälen (28) umgeben ist, und dass die Eintrittskanäle (28) im Querschnitt die Form eines regelmäßigen Sechsecks mit drei ersten Seiten (a) und mit drei zweiten Seiten (b) aufweisen (Figur 5);
   mit:

   A: Querschnittsfläche eines Kanals (28, 30)
   U: Umfang eines Kanals (28, 30).

4. Filterelement nach Anspruch 3, **dadurch gekennzeichnet, dass** sich die ersten Seiten (a) und die zweiten Seiten (b) der Eintrittskanäle (28) einander abwechseln.

**5.** Filterelement nach Anspruch 3 oder 4, **dadurch gekennzeichnet, dass** ein Verhältnis (a/b) der Längen der ersten Seiten (a) und der zweiten Seiten (b) in einem Bereich von 0,3 bis 1,5, bevorzugt in einem Bereich von 0,6 bis 0,75, liegt.

**6.** Filterelement nach einem der Ansprüche 3 bis 5, **dadurch gekennzeichnet, dass** zwei benachbarte Seiten eines sechseckigen Eintrittskanals (28) einen Winkel von 60˚ einschließen.

**7.** Filterelement nach einem der vorhergehenden Ansprüche, **dadurch gekennzeichnet, dass** der Querschnitt des Filterelements (18) durch Aneinanderfügen mehrerer sechseckiger Einheitszellen (EZ) gebildet wird, dass im Mittelpunkt jeder Einheitszelle (EZ) ein zentraler Austrittskanal (30.1) angeordnet ist, und dass der zentrale Austrittskanal (30.1) von sechs Eintrittskanälen (28) umgeben ist, dass die Eintrittskanäle (28) im Querschnitt die Form eines spiegelsymmetrischen Polygons aufweisen, und dass jeweils vier benachbart zueinander angeordnete Eintrittskanäle (28) einen äußeren Austrittskanal (30.2) umschließen. (Figur 5)

**8.** Filterelement nach Anspruch 7, **dadurch gekennzeichnet, dass** die äußeren Austrittskanäle (30.2) im Querschnitt die Form eines Quadrats oder einer Raute aufweisen.

**9.** Filterelement nach einem der Ansprüche 3 bis 8, **dadurch gekennzeichnet, dass** der zentrale Austrittskanal (30.1) im Querschnitt die Form eines gleichseitigen Sechsecks oder die Form eines Kreises hat.

**10.** Filterelement nach einem der vorhergehenden Ansprüche, **dadurch gekennzeichnet, dass** die Grundstruktur des Filterelements (18) eine Zelldichte von 200 cpsi (cpsi = cells per square inch) bis 450 cpsi, bevorzugt von 300 bis 350 cpsi, besitzt.

**11.** Filterelement nach einem der vorhergehenden Ansprüche, **dadurch gekennzeichnet, dass** eine Wandstärke ($W_s$) der Filterwände (31) 0,1 mm bis 1,2 mm, bevorzugt 0,25 mm bis 0,50 mm, beträgt.

**12.** Filterelement (18) nach einem der vorhergehenden Ansprüche, **dadurch gekennzeichnet, dass** das Filterelement (18) durch Extrudieren hergestellt wird.

**13.** Filterelement (18) nach einem der vorhergehenden Ansprüche, **dadurch gekennzeichnet, dass** das Filterelement (18) aus einem keramischen oder einem glaskeramischen Werkstoff, insbesondere aus Cordierit, Aluminiumtitanat oder Siliziumkarbid, hergestellt wird.

**14.** Filterelement (18) nach einem der Ansprüche 1 bis 12, **dadurch gekennzeichnet, dass** das Filterelement (18) aus Sintermetall hergestellt wird.

**15.** Filterelement nach einem der vorhergehenden Ansprüche, **dadurch gekennzeichnet, dass** die Eintrittskanäle (28) an der Eintrittsfläche (22) beginnen und an der Austrittsfläche (24) verschlossen sind, und dass die Austrittskanäle (30) an der Eintrittsfläche (22) verschlossen sind und an der Austrittsfläche (24) enden.

**16.** Filterelement nach einem der vorhergehenden Ansprüche, **dadurch gekennzeichnet, dass** die Porosität des Filtermaterials in einem Bereich zwischen 30 % und 70 % liegt, und dass die mittlere Porengröße des Filtermaterials in einem Bereich zwischen 5 Mikrometern und 30 Mikrometern liegt.

**17.** Filterelement nach Anspruch 16, **dadurch gekennzeichnet, dass** der Anteil der Poren, deren Durchmesser mindestens zweimal so groß wie die mittlere Porengröße ist, höchstens 30% des Volumens aller Poren beträgt.

**18.** Filterelement nach einem der vorhergehenden Ansprüche, **dadurch gekennzeichnet, dass** die auf das gesamte Volumen der Filterwände (31) bezogene Wärmekapazität mindestens 400 Joule/Liter Kelvin [J/lK], bevorzugt zwischen 500 J/lK und 560 J/lK, beträgt.

**19.** Filtereinrichtung mit einem Filterelement (18), mit einem Gehäuse (16) und mit einem Abgasrohr (12), **dadurch gekennzeichnet, dass** das Filterelement ein Filterelement nach einem der vorhergehenden Ansprüche ist.

**Claims**

1. Filter element, especially for filtering exhaust gases of a diesel internal combustion engine, with an inlet area (22) and with an outlet area (24), with a multiplicity of inlet channels (28), and with a multiplicity of outlet channels (30), wherein the inlet channels (28) and the outlet channels (30) are separated by filter walls (31) made of an open-pore material, wherein the cross-sectional area of all of the inlet channels (28) is greater than the cross-sectional area of all of the outlet channels (30), wherein the number of inlet channels (28) is greater than the number of outlet channels (30), and wherein a roundness parameter $f_{in}$ of the cross section of the inlet channels (28) is smaller than a roundness parameter $f_{out}$ of the cross section of the outlet channels (30), wherein the roundness parameter f is defined by the following equation:

$$f = \frac{4\pi A}{U^2}$$

   **characterized in that** the cross section of the filter element (18) is formed by fitting together a plurality of hexagonal unit cells (EZ), **in that** each unit cell (EZ) is composed of equilateral triangles (34), **in that** each of the triangles (34) is mirror-symmetrical to the adjacent triangles (34) with respect to the common side of the triangle, **in that** there are three filter walls (31) in each triangle (34), and **in that** each filter wall (31) runs orthogonally to one side of the triangle (34) (Figure 3);
   where:

   A: is the cross-sectional area of a channel (28, 30)
   U: is the circumference of a channel (28, 30).

2. Filter element according to Claim 1, **characterized in that** the intersecting point of the filter walls (31) lies within the triangle (34) (Figure 3).

3. Filter element, especially for filtering exhaust gases of a diesel internal combustion engine, with an inlet area (22) and with an outlet area (24), with a multiplicity of inlet channels (28), and with a multiplicity of outlet channels (30), wherein the inlet channels (28) and the outlet channels (30) are separated by filter walls (31) made of an open-pore material, wherein the cross-sectional area of all of the inlet channels (28) is greater than the cross-sectional area of all of the outlet channels (30), wherein the number of inlet channels (28) is greater than the number of outlet channels (30), and wherein a roundness parameter $f_{in}$ of the cross section of the inlet channels (28) is smaller than a roundness parameter $f_{out}$ of the cross section of the outlet channels (30), wherein the roundness parameter f is defined by the following equation:

$$f = \frac{4\pi A}{U^2}$$

   **characterized in that** the cross section of the filter element (18) is formed by fitting together a plurality of hexagonal unit cells (EZ), **in that** each unit cell (EZ) is composed of equilateral triangles (34), **in that** each of the triangles (34) is mirror-symmetrical to the adjacent triangles (34) with respect to the common side of the triangle, **in that** a central outlet channel (30.1) is arranged in the centre point of each unit cell (EZ), **in that** the central outlet channel (30.1) is surrounded by six inlet channels (28), and **in that** the inlet channels (28) in cross section have the shape of a regular hexagon with three first sides (a) and with three second sides (b) (Figure 5);
   where
   A: is the cross-sectional area of a channel (28, 30) U: is the circumference of a channel (28, 30).

4. Filter element according to Claim 3, **characterized in that** the first sides (a) and the second sides (b) of the inlet channels (28) mutually alternate.

5. Filter element according to Claim 3 or 4, **characterized in that** a ratio (a/b) of the lengths of the first sides (a) and of the second sides (b) lies within a range of 0.3 to 1.5, preferably within a range of 0.6 to 0.75.

6. Filter element according to one of Claims 3 to 5, **characterized in that** two adjacent sides of a hexagonal inlet channel (28) enclose an angle of 60˚.

7. Filter element according to one of the preceding claims, **characterized in that** the cross section of the filter element (18) is formed by fitting together a plurality of hexagonal unit cells (EZ), **in that** a central outlet channel (30.1) is arranged in the centre point of each unit cell (EZ), and **in that** the central outlet channel (30.1) is surrounded by six inlet channels (28), **in that** the inlet channels (28) in cross section have the shape of a mirror-symmetrical polygon, and **in that** in each case four inlet channels (28) arranged adjacent to one another enclose an outer outlet channel (30.2) (Figure 5).

8. Filter element according to Claim 7, **characterized in that** the outer outlet channels (30.2) in cross section have the shape of a square or of a rhombus.

9. Filter element according to one of Claims 3 to 8, **characterized in that** the central outlet channel (30.1) in cross section has the shape of an equilateral hexagon or the shape of a circle.

10. Filter element according to one of the preceding claims, **characterized in that** the basic structure of the filter element (18) has a cell density of 200 cpsi (cpsi = cells per square inch) to 450 cpsi, preferably of 300 to 350 cpsi.

11. Filter element according to one of the preceding claims, **characterized in that** a wall thickness ($W_s$) of the filter walls (31) is 0.1 mm to 1.2 mm, preferably 0.25 mm to 0.50 mm.

12. Filter element (18) according to one of the preceding claims, **characterized in that** the filter element (18) is produced by extrusion.

13. Filter element (18) according to one of the preceding claims, **characterized in that** the filter element (18) is produced from a ceramic or a glass-ceramic material, in particular from cordierite, aluminium titanate or silicon carbide.

14. Filter element (18) according to one of Claims 1 to 12, **characterized in that** the filter element (18) is produced from sintered metal.

15. Filter element according to one of the preceding claims, **characterized in that** the inlet channels (28) begin at the inlet surface (22) and are closed at the outlet surface (24), and **in that** the outlet channels (30) are closed at the inlet surface (22) and end at the outlet surface (24).

16. Filter element according to one of the preceding claims, **characterized in that** the porosity of the filter material lies within a range of between 30% and 70%, and **in that** the average pore size of the filter material lies within a range of between 5 micrometres and 30 micrometres.

17. Filter element according to Claim 16, **characterized in that** the proportion of pores, the diameter of which is at least twice as large as the average pore size, is at most 30% of the volume of all of the pores.

18. Filter element according to one of the preceding claims, **characterized in that** the heat capacity based on the entire volume of the filter walls (31) is at least 400 joule/litre Kelvin [J/lK], preferably between 500 J/lK and 560 J/lK.

19. Filter device with a filter element (18), with a housing (16) and with an exhaust pipe (12), **characterized in that** the filter element is a filter element according to one of the preceding claims.

**Revendications**

1. Elément de filtre, en particulier pour le filtrage de gaz d'échappement d'un moteur à combustion interne diesel, comprenant une surface d'entrée (22) et une surface de sortie (24), une pluralité de canaux d'entrée (28) et une pluralité de canaux de sortie (30), les canaux d'entrée (28) et les canaux de sortie (30) étant séparés par des parois de filtre (31) en matériau poreux, la surface en section transversale de tous les canaux d'entrée (28) étant supérieure à la surface en section transversale de tous les canaux de sortie (30), le nombre des canaux d'entrée (28) étant supérieur au nombre des canaux de sortie (30) et un paramètre de rotondité $f_{ein}$ de la section transversale des canaux d'entrée (28) étant inférieur à un paramètre de rotondité $f_{aus}$ de la section transversale des canaux de sortie (30), le paramètre de rotondité f étant défini par l'équation suivante :

$$f \; = \; 4\pi A \; / \; U^2$$

**caractérisé en ce que** la section transversale de l'élément de filtre (18) est formée par assemblage de plusieurs cellules unitaires hexagonales (EZ), **en ce que** chaque cellule unitaire (EZ) se compose de triangles isocèles (34), **en ce que** chacun des triangles (34) est à symétrie spéculaire par rapport aux triangles adjacents (34) par rapport au côté commun des triangles, **en ce que** dans chaque triangle (34) sont prévues trois parois de filtre (31), et **en ce que** chaque paroi de filtre (31) s'étend perpendiculairement à un côté du triangle (34) (figure 3) ;
avec :

   A = surface en section transversale d'un canal (28, 30)
   U = circonférence d'un canal (28, 30).

2. Elément de filtre selon la revendication 1, **caractérisé en ce que** l'intersection des parois de filtre (31) se situe à l'intérieur du triangle (34) (figure 3).

3. Elément de filtre, en particulier pour le filtrage de gaz d'échappement d'un moteur à combustion interne diesel, comprenant une surface d'entrée (22) et une surface de sortie (24), une pluralité de canaux d'entrée (28) et une pluralité de canaux de sortie (30), les canaux d'entrée (28) et les canaux de sortie (30) étant séparés par des parois de filtre (31) en matériau poreux, la surface en section transversale de tous les canaux d'entrée (28) étant supérieure à la surface en section transversale de tous les canaux de sortie (30), le nombre des canaux d'entrée (28) étant supérieur au nombre des canaux de sortie (30) et un paramètre de rotondité $f_{ein}$ de la section transversale des canaux d'entrée (28) étant inférieur à un paramètre de rotondité $f_{aus}$ de la section transversale des canaux de sortie (30), le paramètre de rotondité f étant défini par l'équation suivante :

$$f \; = \; 4\pi A \; / \; U^2$$

**caractérisé en ce que** la section transversale de l'élément de filtre (18) est formée par assemblage de plusieurs cellules unitaires hexagonales (EZ), **en ce que** chaque cellule unitaire (EZ) se compose de triangles isocèles (34), **en ce que** chacun des triangles (34) est à symétrie spéculaire par rapport aux triangles adjacents (34) par rapport au côté commun des triangles, **en ce qu'**au centre de chaque cellule unitaire (EZ) est disposé un canal de sortie central (30.1), **en ce que** le canal de sortie central (30.1) est entouré par six canaux d'entrée (28) et **en ce que** les canaux d'entrée (28) présentent, en section transversale, la forme d'un hexagone régulier avec trois premiers côtés (a) et trois deuxièmes côtés (b) (figure 5) ;
avec :

   A = surface en section transversale d'un canal (28, 30)
   U = circonférence d'un canal (28, 30).

4. Elément de filtre selon la revendication 3, **caractérisé en ce que** les premiers côtés (a) et les deuxièmes côtés (b) des canaux d'entrée (28) sont disposés en alternance.

5. Elément de filtre selon la revendication 3 ou 4, **caractérisé en ce qu'**un rapport (a/b) des longueurs des premiers côtés (a) et des deuxièmes côtés (b) est compris dans une plage de 0,3 à 1,5, de préférence dans une plage de 0,6 à 0,75.

6. Elément de filtre selon l'une quelconque des revendications 3 à 5, **caractérisé en ce que** deux côtés adjacents d'un canal d'entrée hexagonal (28) forment un angle de 60˚.

**7.** Elément de filtre selon l'une quelconque des revendications précédentes, **caractérisé en ce que** la section transversale de l'élément de filtre (18) est formée par assemblage de plusieurs cellules unitaires hexagonales (EZ), **en ce qu'**au centre de chaque cellule unitaire (EZ) est disposé un canal de sortie central (30.1), **en ce que** le canal de sortie central (30.1) est entouré par six canaux d'entrée (28) et **en ce que** les canaux d'entrée (28) présentent, en section transversale, la forme d'un polygone à symétrie spéculaire, et **en ce que** quatre canaux d'entrée (28) disposés à chaque fois l'un à côté de l'autre entourent un canal de sortie extérieur (30.2) (figure 5).

**8.** Elément de filtre selon la revendication 7, **caractérisé en ce que** les canaux de sortie extérieurs (30.2) présentent, en section transversale, la forme d'un carré ou d'un losange.

**9.** Elément de filtre selon l'une quelconque des revendications 3 à 8, **caractérisé en ce que** le canal de sortie central (30.1) présente, en section transversale, la forme d'un hexagone régulier ou la forme d'un cercle.

**10.** Elément de filtre selon l'une quelconque des revendications précédentes, **caractérisé en ce que** la structure de base de l'élément de filtre (18) possède une densité de cellules de 200 cpsi (cpsi = cells per square inch) à 450 cpsi, de préférence de 300 à 350 cpsi.

**11.** Elément de filtre selon l'une quelconque des revendications précédentes, **caractérisé en ce qu'**une épaisseur de paroi ($W_s$) des parois de filtre (31) vaut de 0,1 mm à 1,2 mm, de préférence de 0,25 mm à 0,5 mm.

**12.** Elément de filtre (18) selon l'une quelconque des revendications précédentes, **caractérisé en ce que** l'élément de filtre (18) est fabriqué par extrusion.

**13.** Elément de filtre (18) selon l'une quelconque des revendications précédentes, **caractérisé en ce que** l'élément de filtre (18) est fabriqué à partir d'un matériau céramique ou vitrocéramique, en particulier en Cordite, en titanate d'aluminium ou en carbure de silicium.

**14.** Elément de filtre (18) selon l'une quelconque des revendications 1 à 12, **caractérisé en ce que** l'élément de filtre (18) est fabriqué en métal fritté.

**15.** Elément de filtre selon l'une quelconque des revendications précédentes, **caractérisé en ce que** les canaux d'entrée (28) commencent au niveau de la surface d'entrée (22) et sont fermés au niveau de la surface de sortie (24), et **en ce que** les canaux de sortie (30) sont fermés au niveau de la surface d'entrée (22) et se terminent au niveau de la surface de sortie (24).

**16.** Elément de filtre selon l'une quelconque des revendications précédentes, **caractérisé en ce que** la porosité du matériau de filtre est comprise dans une plage entre 30 % et 70%, et **en ce que** la taille moyenne des pores du matériau de filtre est comprise dans une plage entre 5 microns et 30 microns.

**17.** Elément de filtre selon la revendication 16, **caractérisé en ce que** la proportion des pores dont le diamètre est au moins deux fois plus grand que la taille moyenne des pores, est d'au plus 30 % du volume de tous les pores.

**18.** Elément de filtre selon l'une quelconque des revendications précédentes, **caractérisé en ce que** la capacité thermique rapportée au volume total des parois de filtre (31) vaut au moins 400 Joules/litre Kelvin [J/lK], de préférence est comprise entre 500 J/lK et 560 J/lK.

**19.** Dispositif de filtre comprenant un élément de filtre (18), un boîtier (16) et un tube de gaz d'échappement (12), **caractérisé en ce que** l'élément de filtre est un élément de filtre selon l'une quelconque des revendications précédentes.

## FIG. 1

## FIG. 2

# FIG. 3

FIG. 4

FIG. 5

FIG. 6

d

30.1 / 6

34

$W_S$

$W_S$

A

28

$W_S$

$W_S$

e

30.2 / 2

B = A sin(30°) = ½ A

FIG. 7

d

34

$W_S$

$W_S$

A

$W_S$

$W_S$

e

B = A sin(30°) = ½

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1502640 A1
- EP 0089751 A
- WO 20051165589 A
- US 5416676 A